# EUROPEAN PATENT APPLICATION

(11) **EP 4 537 728 A1**
(43) Date of publication of application: **16.04.2025**
(21) Application number: 23818853.6
(22) Date of filing: 28.04.2023
(51) Int. Cl.: A47L 11/28, A47L 11/40, A47L 13/10

(54) **ROBOT MOP, WATER SPRAYING CONTROL METHOD AND APPARATUS THEREOF, AND READABLE STORAGE MEDIUM**

(30) Priority: 09.06.2022 CN 202210653522
(71) Applicant: Qfeeltech (Beijing) Co., Ltd., Beijing 100191 (CN)
(72) Inventor: LIU, Zhanglin, Beijing 100191 (CN); ZHANG, Wei, Beijing 100191 (CN)
(74) Representative: Novagraaf International SA
(86) International application number: PCT/CN2023/091605
(87) International publication number: WO 2023/236688

(57) **Abstract**

The present disclosure provides a floor mopping robot and its water spray control method and apparatus and a readable storage medium, the water spray control method includes: a first control step, configured to control, in a first stage, a water spray system of the floor mopping robot to spray a first pre-set amount of water; and a second control unit, configured to control, in a second stage after the first stage, the water spray system to spray a second pre-set amount of water each time, where, each of the first stage and the second stage is related to an out-of-station distance, an already cleaned area, or an already moved distance of the floor mopping robot, where the out-of-station distance is a distance that the floor mopping robot has moved away from a charging station since start-up, where the second pre-set amount of water is less than the first pre-set amount of water. As such, while the cleaning effect of the floor mopping robot is enhanced, the service time of the floor mopping robot is also increased without increasing the volume of the water tank.

## Description

### TECHNICAL FIELD

The present disclosure relates to the technical field of smart homes, and in particular, to a floor mopping robot and a water spray control method and apparatus for the floor mopping robot, and a readable storage medium.

### BACKGROUND TECHNOLOGY

A floor mopping robot may be used to wet and clean a floor, here when the floor mopping robot cleans the floor, a water spray system is controlled to spray water to wet a mop or the floor.

Existing methods for spraying water only simply maintain a steady degree of wetness for the mop or the floor. Thus, at the beginning of the cleaning, the cleaning effect provided by the floor mopping robot to the floor is insufficient; at a later stage, the amount of water left in the water tank is often insufficient to accomplish all cleaning tasks.

### CONTENT OF INVENTION

In view of the above, the present disclosure provides a floor mopping robot and a water spray control method and apparatus for the floor mopping robot, and a readable storage medium, so as to improve the cleaning effect of the floor mopping robot.

According to a first aspect of the present disclosure, a water spray control method for a floor mopping robot is provided, including: a first control step, configured to control, in a first stage, a water spray system of the floor mopping robot to spray a first pre-set amount of water; and a second control step, configured to control, in a second stage after the first stage, the water spray system to spray a second pre-set amount of water each time, where, each of the first stage and the second stage is related to an out-of-station distance, an already cleaned area, or an already moved distance of the floor mopping robot, where the out-of-station distance is a distance that the floor mopping robot has moved away from a charging station since start-up, and where the second pre-set amount of water is less than the first pre-set amount of water.

According to a second aspect of the present disclosure, a floor mopping robot is provided, including: a first control unit, configured to control, in a first stage, a water spray system of the floor mopping robot to spray a first pre-set amount of water; and a second control unit, configured to control, in a second stage after the first stage, the water spray system to spray a second pre-set amount of water each time, where, each of the first stage and the second stage is related to an out-of-station distance, an already cleaned area, or an already moved distance of the floor mopping robot, where the out-of-station distance is a distance that the floor mopping robot has moved away from a charging station since start-up, and where the second pre-set amount of water is less than the first pre-set amount of water.

In a possible implementation, the first stage is a stage corresponding to the out-of-station distance of the floor mopping robot being smaller than or equal to an out-of-station distance threshold, and the second stage is a stage corresponding to the out-of-station distance of the floor mopping robot being greater than the out-of-station distance threshold.

In a possible implementation, the first stage is a stage corresponding to a ratio between the already cleaned area of the floor mopping robot and a to-be-cleaned area being smaller than a first area threshold; the second stage is a stage corresponding to the ratio being greater than or equal to the first area threshold.

In a possible implementation, the first stage is a stage corresponding to the already cleaned area of the floor mopping robot being smaller than a first absolute value area threshold; the second stage is a stage corresponding to the already cleaned area being greater than or equal to the first absolute value area threshold; or the first stage is a stage corresponding to the already moved distance of the floor mopping robot being smaller than a first absolute value distance threshold; the second stage is a stage corresponding to the already moved distance being greater than or equal to the first absolute value distance threshold.

In a possible implementation, the second control unit is configured to: determine the to-be-cleaned area of the floor mopping robot; determine a target moving distance based on the to-be-cleaned area; in the second stage, whenever the already moved distance of the floor mopping robot reaches the target moving distance, control the water spray system to spray the second pre-set amount of water.

In a possible implementation, the second control unit is configured to: when the to-be-cleaned area is smaller than or equal to a first to-be-cleaned area threshold, determine a first target moving distance as the target moving distance; when the to-be-cleaned area is greater than the first to-be-cleaned area threshold and smaller than or equal to a second to-be-cleaned area threshold, determine a second target moving distance that is inversely correlated with the to-be-cleaned area as the target moving distance, where a maximum value of the second target moving distance is smaller than or equal to the first target moving distance.

In a possible implementation, the second control unit is configured to: when the to-be-cleaned area is greater than the second to-be-cleaned area threshold and smaller than or equal to a third to-be-cleaned area threshold, determine a third target moving distance as the target moving distance, where the third target moving distance is equal to or smaller than a minimum value of the second target moving distance.

In a possible implementation, the second target moving distance is equal to a difference resulting from deducting a product of a pre-set coefficient and the to-be-cleaned area from a pre-set distance.

In a possible implementation, the floor mopping robot also includes: a third control unit, configured to control, in a third stage after the second stage, the water spray system to spray a third pre-set amount of water each time, where the third pre-set amount of water is less than the second pre-set amount of water, where the third stage is a stage corresponding to a remaining water amount of the floor mopping robot being smaller than a water amount threshold; or the third stage is a stage corresponding to an area ratio between the already cleaned area of the floor mopping robot and the to-be-cleaned area being greater than a second area threshold, where the second area threshold is greater than the first area threshold; or the third stage is a stage corresponding to a remaining area ratio between a remaining area of the floor mopping robot and the to-be-cleaned area being smaller than a remaining area threshold.

In a possible implementation, the floor mopping robot also includes: a third control unit, configured to control, in a third stage after the second stage, the water spray system to spray a third pre-set amount of water each time, where the third pre-set amount of water is less than the second pre-set amount of water, the third stage is a stage corresponding to a remaining water amount of the floor mopping robot being smaller than a water amount threshold; or the third stage is a stage corresponding to the already moved distance of the floor mopping robot being greater than a second absolute value distance threshold, where the second absolute value distance threshold is greater than the first absolute value distance threshold.

In a possible implementation, the first control unit is configured to: determine the to-be-cleaned area of the floor mopping robot; determine a target water spray amount based on the to-be-cleaned area, as the first pre-set amount; in the first stage, control the water spray system to spray the determined target water spray amount of water.

In a possible implementation, the first control unit is configured to: when the to-be-cleaned area is smaller than or equal to a fourth to-be-cleaned area threshold, determine a first target water spray amount that positively correlates with the to-be-cleaned area as the target water spray amount; when the to-be-cleaned area is greater than the fourth to-be-cleaned area threshold, determine a second target water spray amount as the target water spray amount, where the second target water spray amount is equal to or greater than a maximum value of the first target water spray amount.

In a possible implementation, the second control unit is configured to: determine a target moving distance; in the second stage, whenever the already moved distance of the floor mopping robot reaches the target moving distance, control the water spray system to spray the second pre-set amount of water.

In a possible implementation, the second control unit is configured to: determine a fourth target moving distance that inversely correlates with the already moved distance of the floor mopping robot as the target moving distance; or determine a fixed fifth target moving distance as the target moving distance.

In a possible implementation, the second control unit is configured to: when the first stage is a stage corresponding to the already moved distance of the floor mopping robot being smaller than the first absolute value distance threshold, determine a target water spray amount that inversely correlates with the already moved distance as the second pre-set amount.

In a possible implementation, the second control unit is configured to: calculate the target water spray amount according to a formula of V= -a×L + b, where L represents the already moved distance, V represents the target water spray amount, a, b are coefficients.

In a possible implementation, the first control unit is configured to: in the first stage, during a time period in which the already moved distance of the floor mopping robot reaches a first distance, control the water spray system to accumulatively spray the first pre-set amount of water; or in the first stage, at a time instance when the already moved distance of the floor mopping robot reaches the first distance, control the water spray system to spray the first pre-set amount of water.

In a possible implementation, the first control unit is configured to: in the first stage, during a time period in which the already cleaned area of the floor mopping robot reaches a first area, control the water spray system to accumulatively spray the first pre-set amount of water; or in the first stage, at a time instance when the already cleaned area of the floor mopping robot reaches the first area, control the water spray system to spray the first pre-set amount of water.

According to a third aspect of the present disclosure, a water spray control apparatus for a floor mopping robot is provided, including: a processor; a storage device configured to store processor-executable instructions; where, the processor is configured to implement the above-described water spray control method when the processor executes the instructions stored in the storage device.

According to a fourth aspect of the present disclosure, a computer-readable storage medium is provided, which stores computer program instructions, where, when the instructions are executed by a processor of a floor mopping robot, the above-described water spray control method is executed.

According to a fifth aspect of the present disclosure, a computer program product is provided, including computer-readable codes, or a computer-readable storage medium carrying computer-readable codes, when the computer-readable codes are executed by a processor of a floor mopping robot, the processor of the floor mopping robot executes the above-described water spray control method.

According to the present disclosure, in the first stage, the floor mopping robot controls the water spray system to spray a first pre-set amount of water, and in the second stage after the first stage, the floor mopping robot controls the water spray system to spray a second pre-set amount of water each time that is less than the first pre-set amount of water. As such, the water spray amount of the water spray system is controlled based on the current stage, such that the water spray system sprays a certain amount of water that is needed in the current stage. For example, in the first stage in which relatively more water is needed, relatively more water may be sprayed by the water spray system, and in the second stage in which relatively less water is needed, relatively less water may be sprayed by the water spray system. Therefore, in the present disclosure, not only the relatively more water sprayed in the first stage is utilized to ensure that the floor is wetted sufficiently to guarantee a cleaning effect, but also water consumption in the water tank can be reduced when there is no need to consume a lot of water, thereby extending the effective work time and the cleaning area.

Based on the detailed descriptions of the illustrative embodiments with reference to the accompanying drawings, other features and aspects of the present disclosure will become clearer.

### DESCRIPTION OF ACCOMPANYING DRAWINGS

The accompanying drawings, which are included in the specification and form parts of the specification, together with the specification, show the illustrative embodiments, features and aspects of the present disclosure, and are used to explain the principle of the present disclosure.
FIG. 1 is a flowchart illustrating a water spray control method for a floor mopping robot according to an illustrative embodiment.
FIG. 2 is a flowchart illustrating a water spray control method for a floor mopping robot according to an illustrative embodiment.
FIG. 3 is a flowchart illustrating a water spray control method for a floor mopping robot according to an illustrative embodiment.
FIGs. 4a-4b are flowcharts illustrating water spray control methods for a floor mopping robot according to illustrative embodiments.
FIG. 5a is a flowchart illustrating a water spray control method for a floor mopping robot according to an illustrative embodiment.
FIG. 5b is a flowchart illustrating determination of a target moving distance according to an illustrative embodiment.
FIG. 5c is a flowchart illustrating determination of a target water spray amount according to an illustrative embodiment.
FIG. 6 is a flowchart illustrating a water spray control method for a floor mopping robot according to an illustrative embodiment.
FIG. 7 is a flowchart illustrating a water spray control method for a floor mopping robot according to an illustrative embodiment.
FIG. 8 is a diagram of a floor mopping robot according to an illustrative embodiment.

### DETAILED IMPLEMENTATIONS

Next, various illustrative embodiments, features, and aspects of the present disclosure will be explained in detail with reference to the accompanying drawings. The same labels in the accompanying drawings represent components having the same or similar functions. Although various aspects are illustrated in the accompanying drawings, unless otherwise noted, the drawings are not necessarily to scale.

The specific term "illustrative" as used herein means "as an example, an embodiment, or illustration." Any embodiment modified by the term "illustrative" need not be interpreted as being advantageous or better than other embodiments.

In addition, to better explain the present disclosure, various specific details are provided in the following detailed implementations. A person having ordinary skills in the art can appreciate that without certain specific details, the present disclosure can still be implemented. In some other embodiments, methods, means, components and electric circuits that may be well-known to a person having ordinary skills in the art are not explained in detail, such that the main principle of the present disclosure can be conveniently explained.

As described above, it is needed to provide a water spray method that can increase the cleaning effect of the floor mopping robot, and which in the meantime can increase the service time of the floor mopping robot without increasing the volume of the water tank.

As such, considering that during a time period in which the floor mopping robot executes a task, there may be different stages in which the demands for water may be different (for example, there may be a stage in which relatively more water needs to be consumed and other stages in which relatively less water needs to be consumed). If the water spray amount of the water spray system can be controlled based on the current stage, such that the water spray system sprays a certain amount of water that is needed at the current stage, then not only it is ensured that the floor can be sufficiently wetted to guarantee the cleaning effect, but also the water consumption amount in the water tank can be reduced when there is no need to consume a lot of water, thereby extending the effective work time and cleaning area, and therefore resolving the above-described problems.

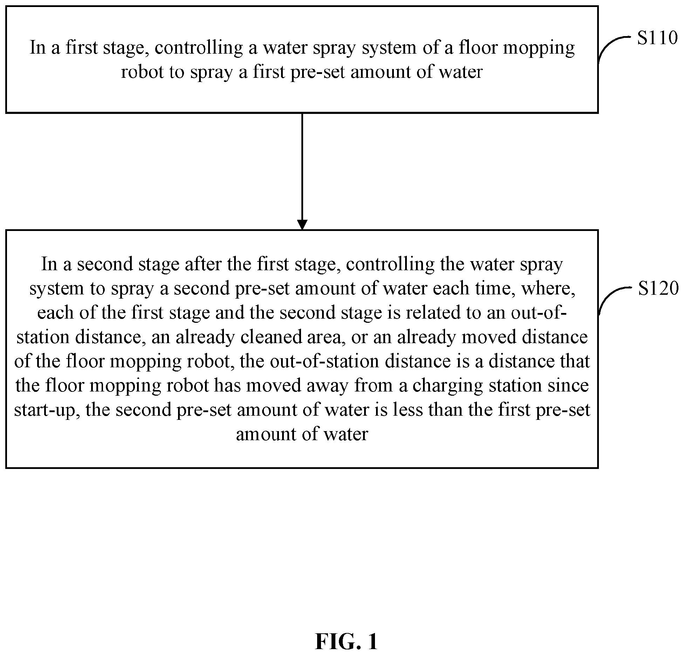

Based on the above conception, a water spray control method for a floor mopping robot is provided as shown in FIG. 1. The water spray control method is executed by a floor mopping robot. The floor mopping robot may be a device that autonomously moves in a closed space of an actual work zone while keeping a mop tightly contacting a floor to be cleaned to realize mopping of the floor of the closed space. For example, the floor mopping robot may be, but not be limited to, a smart floor mopping and sweeping integrated robot, etc.

### First embodiment:

Referring to FIG. 1, the water spray control method of this illustrative embodiment may include the following steps:
Step S110, in a first stage, controlling a water spray system of a floor mopping robot to spray a first pre-set amount of water.
Step S120, in a second stage after the first stage, controlling the water spray system to spray a second pre-set amount of water each time, where, each of the first stage and the second stage is related to an out-of-station distance, an already cleaned area, or an already moved distance of the floor mopping robot, where the out-of-station distance is a distance that the floor mopping robot has moved away from a charging station since start-up, and where the second pre-set amount of water is less than the first pre-set amount of water.

In this embodiment, the first stage may be a stage in which a relatively larger amount of water is needed during a time period in which the floor mopping robot executes a floor mopping task, correspondingly, the second stage may be a stage in which a relatively smaller amount of water is needed during the time period in which the floor mopping robot executes a floor mopping task.

It should be noted that, the first pre-set amount can be an amount of water sprayed each time in the first stage, or can be a total water spray amount in the first stage (an amount of water sprayed at a single spray, e.g., 36ml), correspondingly, the second pre-set amount may be an amount of water sprayed each time in the second stage (e.g., 3ml), and the second pre-set amount is smaller than the first pre-set amount. Here, the second pre-set amount may be a fixed value, or may be a variable value. The variable value may be a value that changes according to functions such as a certain function or a step function.

If the first pre-set amount is the total water spray amount in the first stage, then the amount of water sprayed each time (second pre-set amount) in the second stage is smaller than the total water spray amount (first pre-set amount) of water sprayed in the first stage. If the first pre-set amount is the amount of water sprayed each time in the first stage, then the amount of water sprayed each time (second pre-set amount) in the second stage is smaller than the amount of water sprayed each time (first pre-set amount) in the first stage.

In a possible implementation, in an initial stage of the floor mopping robot executing a floor mopping task (a stage corresponding to a time period in which the floor mopping robot has moved away from the charging station for a relatively short out-of-station distance since the start-up of the floor mopping robot), relatively more water may be needed to wet the mop, therefore relatively more water is needed. In a normal operating stage after the initial stage (a stage corresponding to a relatively long out-of-station distance), because the mop has been wetted, therefore only relatively less water is needed to supplement water consumed during the execution of the floor mopping task. Therefore, each of the first stage and the second stage is related to the out-of-station distance. For example, the initial stage may correspond to the first stage and the normal operating stage may correspond to the second stage.

In a possible implementation, at a beginning stage of the normal operating stage that is after the initial stage (at the beginning of execution of a floor mopping operation, a stage corresponding to the already moved distance being relatively small or a stage corresponding to the already cleaned area being relatively small), relatively more water may be needed, and in a stage following the beginning stage of the normal operating stage (a stage corresponding to the already moved distance being relatively large or a stage corresponding to the already cleaned area being relatively large), relative less water may be needed. Therefore, each of the first stage and the second stage is related to the already moved distance, or, each of the first stage and the second stage is related to the already cleaned area. For example, the beginning stage of the normal operating stage may correspond to the first stage and the stage following the beginning stage of the normal operating stage may correspond to the second stage.

It should be noted that, for the convenience of understanding, the above examples are provided for the first stage and the second stage. However, the present disclosure is not limited to these examples. Other two stages may also be used as the first stage and the second stage, as long as among the two stages, water needed in the latter second stage is less than water needed in the former first stage, and these two stages are both related to the out-of-station distance, the already cleaned area, or the already moved distance. Due to the limitation on the space, the present disclosure will not expand the discussions.

According to this embodiment, in the first stage, the floor mopping robot controls the water spray system to spray the first pre-set amount of water, and in the second stage after the first stage, the floor mopping robot controls the water spray system to spray a second pre-set amount of water each time that is less than the first pre-set amount of water. As such, by controlling the water spray system to spray more water in the first stage, the mop and the floor can be better wetted. By controlling the water spray system to spray less water in the second stage, water stain that may be formed on the floor due to excessive water spray can be avoided, thereby reducing slip, and saving water consumption, and extending the effective cleaning time of the floor mopping robot.

For example, a stage corresponding to a time when the floor mopping robot just leaves the charging station (simply referred to as out-of-station) (a stage corresponding to a relatively short out-of-station distance) may be the first stage, a stage corresponding to the normal operation (a stage corresponding to a relatively long out-of-station distance) may be the second stage, the present embodiment is explained using these examples. When the floor mopping robot just leaves the charging station, the floor mopping robot is in the first stage. The water spray system is controlled to spray a fixed initial water spray amount (first pre-set amount, e.g., 36ml), then the floor mopping robot enters the second stage in which the floor mopping robot operates normally. At this moment, the water spray system may be controlled to spray a fixed second pre-set amount of water (e.g., 3ml) each time according to a fixed water spray time interval or a fixed water spray distance interval. Here, the water spray time interval or the water spray distance interval may be determined based on the to-be-cleaned area (i.e., the total area to be cleaned in this operation, which may be obtained through calculation based on an existing map and based on an operating task and/or operating mode of the floor mopping robot). For example, the floor mopping robot may determine, based on the map and the cleaning mode, that the to-be-cleaned area is 25 square feet. The water spray distance interval may be determined to be 5.44m based on the 25 sqft to-be-cleaned area. Therefore, it can be determined that in the second stage, 3ml of water is sprayed for every movement of 5.44m. Alternatively, the floor mopping robot may determine, based on the to-be-cleaned area of 25 sqft, that the water spray time interval is 5s. Therefore, it can be determined that in the second stage, 3ml of water is sprayed for every 5s of moving time. It can be seen that, in the initial stage (first stage), 36ml of water is sprayed, and in the subsequent stage (second stage), 3ml of water is sprayed at every fixed moving distance such as 5.44m, or 3ml of water is sprayed at every fixed water spray time interval such as 5s. Because 36ml > 3ml, it shows that the water spray amount is larger in the initial stage, and the water spray amount is smaller in the latter stage.

In a possible implementation, step S120 may also include: determining a target moving distance; in the second stage, whenever the already moved distance of the floor mopping robot reaches the target moving distance, controlling the water spray system to spray the second pre-set amount of water each time.

In this embodiment, in the second stage, whenever the floor mopping robot has moved for the determined target moving distance, the water spray system is controlled to spray the second pre-set amount of water.

In a possible implementation, the target moving distance may be determined through the following manner: determining a fourth target moving distance that inversely correlates with already moved distance of the floor mopping robot as the target moving distance; or determining a fixed fifth target moving distance as the target moving distance.

In this embodiment, considering that as the accumulated moving distance (already moved distance) increases, the distance interval needs to be gradually reduced (target moving distance inversely correlates with the already moved distance), therefore, the fourth target moving distance that decreases as the already moved distance increases may be set as the target moving distance. Alternatively, considering that as the accumulated moving distance increases, the distance interval needs to be reduced based on a piecewise function, therefore, the fifth target moving distance that is calculated based on the piecewise function may be set as the target moving distance. For example, first, water spray may be performed according to one water spray for every 5m of moving distance, then water spray may be performed according to one water spray for every 4m of moving distance, etc.

In a possible implementation, step S110 may include: in the first stage, during a time period in which the already moved distance of the floor mopping robot reaches a first distance, controlling the water spray system to accumulatively spray the first pre-set amount of water; for example, in the first stage, five times of water spray may be performed, such that the total amount of sprayed water in the five times of water spray reaches the first pre-set amount. Alternatively, in the first stage, at a time instance when the already moved distance of the floor mopping robot reaches the first distance, the water spray system is controlled to spray the first pre-set amount of water at a single spray.

In this embodiment, illustratively, in the first stage, during a time period in which the floor mopping robot moves for the first distance, the accumulated amount of sprayed water reaches the first pre-set amount (constant water spray), or, in the first stage, at a time instance when the floor mopping robot has moved for the first distance, the first pre-set amount of water is sprayed (a single spray).

In a possible implementation, step S110 may include: in the first stage, during a time period in which the already cleaned area of the floor mopping robot reaches a first area, controlling the water spray system to accumulatively spray the first pre-set amount of water; or, in the first stage, at a time instance when the already cleaned area of the floor mopping robot reaches the first area, controlling the water spray system to spray the first pre-set amount of water.

In this embodiment, in the first stage, during a time period in which the already cleaned area of the floor mopping robot reaches the first area, the accumulated amount of sprayed water reaches the first pre-set amount, or, in the first stage, when the already cleaned area of the floor mopping robot reaches the first area, water sprayed at a single spray reaches the first pre-set amount.

Dividing the first stage and the second stage in the first embodiment based on the out-of-station distance of the floor mopping robot results in the second embodiment.

### Second embodiment:

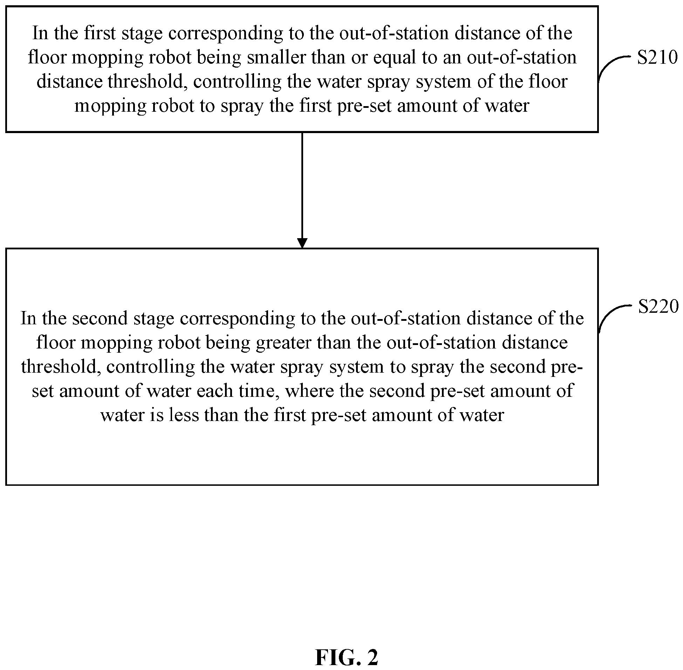

Referring to FIG. 2, a water spray control method according to an embodiment of an illustrative embodiment may include the following steps:
Step S210, in a first stage corresponding to the out-of-station distance of the floor mopping robot being smaller than or equal to an out-of-station distance threshold, controlling a water spray system of the floor mopping robot to spray a first pre-set amount of water.

In this embodiment, after the floor mopping robot is started up, the floor mopping robot moves away from the charging station for a relatively short out-of-station distance (e.g., 1m), thereby avoiding short circuit in the charging contact points of the charging station that may be caused by water sprayed by the water spray system. The first stage may be a stage corresponding to a time period starting from the start-up to a time instance when the floor mopping robot has moved away from the charging station for the relatively short out-of-station distance. After the floor mopping robot leaves the charging station, illustratively, the floor mopping robot may swing left and right at the same place while spraying the first pre-set amount of water, in order to wet the mop or wet the floor. Illustratively, the first pre-set amount is 36ml.

Step S220, in the second stage corresponding to the out-of-station distance of the floor mopping robot being greater than an out-of-station distance threshold, controlling the water spray system to spray a second pre-set amount of water each time, where the second pre-set amount of water is less than the first pre-set amount of water.

In a possible implementation, in the second stage, the floor mopping robot may spray a fixed second pre-set amount of water at a fixed distance interval (that is, the above-described water spray distance interval). For example, water spray may be performed according to spraying 3ml of water for every 5m of moving distance; the floor mopping robot may spray the fixed second pre-set amount of water based on a fixed water spray time interval, for example, the water spray may be performed according to spraying 3ml of water for every 5s of moving time.

In a possible implementation, the floor mopping robot may spray the fixed second pre-set amount of water according to a dynamic distance interval or dynamic time interval. For example, after water spray is performed at least one time according to spraying 3ml of water for every 5m of moving distance, water spray may then be performed at least one time according to spraying 3ml of water for every 3m of moving distance. Alternatively, after water spray is performed at least one time according to spraying 3ml of water for every 5s of moving time, water spray may then be performed at least one time according to spraying 3ml of water for every 3s of moving time.

In a possible implementation, in the second stage, the floor mopping robot may spray a dynamic second pre-set amount of water based on a fixed distance interval or a fixed time interval. For example, after water spray is performed at least one time according to spraying 3ml of water for every 5m of moving distance or every 5s of moving time, water spray may then be performed at least one time according to spraying 2ml of water for every 5m of moving distance or every 5s of moving time.

In a possible implementation, in the second stage, the floor mopping robot may spray a dynamic second pre-set amount of water based on a dynamic distance interval or a dynamic time interval. For example, after water spray is performed at least one time according to spraying 3ml of water for every 5m of moving distance or 5s of moving time, water spray may then be performed at least one time according to spraying 2ml of water for every 3m of moving distance or 3s of moving time.

It should be understood that the present disclosure does not limit the water spray time interval, the distance interval (or referred to as a water spray distance) and the water spray amount. A person having ordinary skills in the art can select suitable water spray intervals and the amount of water spray according to the technical solution of the present disclosure in combination with mastered technical knowledge.

Therefore, in this embodiment, the water spray system is controlled to spray relatively more water in the first stage that corresponds to an out-of-station distance being smaller than or equal to an out-of-station distance threshold, and to spray relatively less water in the second stage that corresponds to the out-of-station distance being greater than the out-of-station distance threshold. As such, not only the relatively more water sprayed in the first stage may be used to keep the mop and the floor sufficiently wet for ensuring a cleaning effect, but also the water consumption in the water tank can be reduced when there is no need to consume a lot of water, thereby extending the effective work time and cleaning area.

Dividing the first stage and the second stage in the first embodiment based on a ratio between the already cleaned area and the to-be-cleaned area of the floor mopping robot results in a third embodiment.

### Third embodiment:

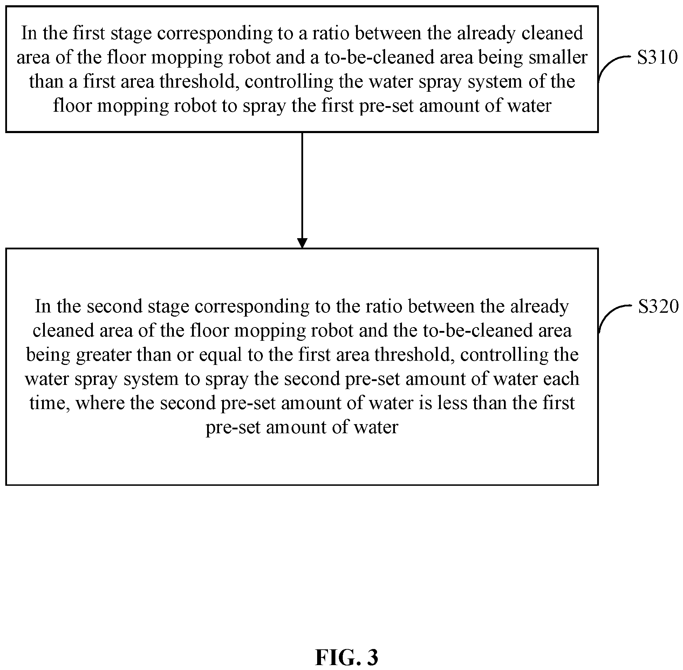

Referring to FIG. 3, a water spray control method according to an illustrative embodiment may include the following steps:
Step S310, in a first stage corresponding to a ratio between an already cleaned area of the floor mopping robot and a to-be-cleaned area being less than a first area threshold, controlling the water spray system of the floor mopping robot to spray a first pre-set amount of water.
Step S320, in a second stage corresponding to the ratio between the already cleaned area of the floor mopping robot and the to-be-cleaned area being greater than or equal to the first area threshold, controlling the water spray system to spray a second pre-set amount of water each time, where the second pre-set amount of water is less than the first pre-set amount of water.

In this embodiment, the threshold, for example, the first area threshold (e.g., 5%), may be set based on a ratio between an actual moved area (also referred to as an already cleaned area) and the to-be-cleaned area, and the first stage and the second stage may be set based on the ratio and the threshold. Here, an actual moved distance and a work width of the floor mopping robot may be obtained, the actual moved area may be determined based on the actual moved distance and the work width, for example, the actual moved area may be determined based on the following formula: actual moved area = actual moved distance of the floor mopping robot × the work width of the floor mopping robot. The to-be-cleaned area may be determined based on a map and a cleaning mode.

When the ratio between the actual moved area of the floor mopping robot and the to-be-cleaned area is smaller than a first area threshold, then the stage at this moment is the first stage, water spray may be performed according to a relatively large first pre-set amount (e.g., 10ml); when the ratio between the actual moved area of the floor mopping robot and the to-be-cleaned area is greater than or equal to the first area threshold, the stage at this moment is the second stage, and water spray may be performed according to a relatively small second pre-set amount (e.g., 3ml).

Therefore, in this embodiment, the water spray system is controlled to spray relatively more water in the first stage that corresponds to the ratio between the already cleaned area of the floor mopping robot and the to-be-cleaned area being smaller than the first area threshold, and to spray relatively less water in the second stage that corresponds to the ratio being greater than or equal to the first area threshold. As such, not only it can be ensured that the floor is sufficiently wet to ensure the cleaning effect, but also the water consumption amount in the water tank can be reduced when there is no need to consume a lot of water, thereby extending the effective work time and cleaning area.

Dividing the first stage and the second stage in the first embodiment based on the already cleaned area / already moved distance of the floor mopping robot results in a fourth embodiment.

### Fourth embodiment:

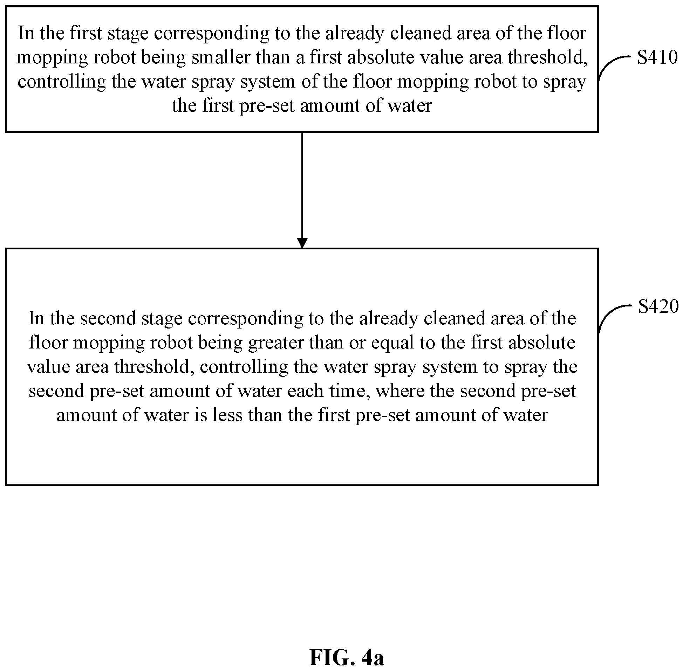

Referring to FIG. 4a, a water spray control method according to an illustrative embodiment may include the following steps:
Step S410, in the first stage that corresponds to an already cleaned area of the floor mopping robot being smaller than a first absolute value area threshold, controlling a water spray system of the floor mopping robot to spray a first pre-set amount of water.
Step S420, in the second stage that corresponds to the already cleaned area of the floor mopping robot being greater than or equal to the first absolute value area threshold, controlling the water spray system to spray a second pre-set amount of water each time, where the second pre-set amount of water is less than the first pre-set amount of water.

In this embodiment, the threshold, for example, the first absolute value area threshold (e.g., 25 square feet), may be set based on the absolute value of the actual moved area (also referred to as the already cleaned area), and the first stage and the second stage may be set based on the absolute value and the threshold. A method for obtaining the already cleaned area may refer to the description of the third embodiment, which is not repeated.

When the actual moved area of the floor mopping robot is smaller than the first absolute value area threshold, the stage at this moment is the first stage, and water spray is performed based on the relatively larger first pre-set amount (e.g., 10ml); when the actual moved area of the floor mopping robot is greater than or equal to the first absolute value area threshold, the stage at this moment is the second stage, and water spray is performed based on the relatively smaller second pre-set amount (e.g., 3ml).

Therefore, in this embodiment, the water spray system is controlled to spray relatively more water in the first stage that corresponds to the already cleaned area being smaller than the first absolute value area threshold, and to spray relatively less water in the second stage that corresponds to the already cleaned area being greater than or equal to the first absolute value area threshold. As such, not only it can be ensured that the floor is sufficiently wet to ensure the cleaning effect, but also water consumption amount in the water tank can be reduced when there is no need to consume a lot of water, thereby extending the effective work time and cleaning area.

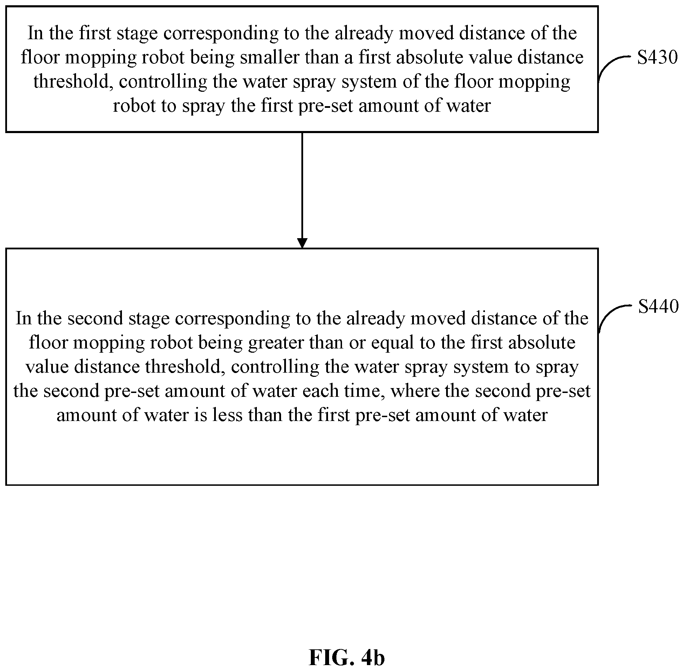

Referring to FIG. 4b, a water spray control method according to an illustrative embodiment may include the following steps:
Step S430, in the first stage that corresponds to an already moved distance of the floor mopping robot being smaller than a first absolute value distance threshold, controlling the water spray system of the floor mopping robot to spray a first pre-set amount of water.
Step S440, in the second stage that corresponds to the already moved distance of the floor mopping robot being greater than or equal to the first absolute value distance threshold, controlling the water spray system to spray a second pre-set amount of water each time, where the second pre-set amount of water is less than the first pre-set amount of water.

In this embodiment, the threshold, for example, the first absolute value distance threshold (e.g., 50m), may be set based on an absolute value of the actual moved distance (also referred to as the already moved distance), and the first stage and the second stage may be set based on the absolute value and the threshold. Here, the already moved distance may be an absolute value of a displacement obtained through calculation based on coordinates of a starting location and an ending location and coordinates of a current location of the floor mopping robot, and is not a distance calculated by accumulating lengths of actual moving paths by various dead reckoning sensors, such as an odometer, an inertial measurement unit (IMU), etc. Therefore, the floor mopping robot may avoid being stranded in a relatively small floor zone and avoid causing multiple water sprays in the small zone.

When the actual moved distance of the floor mopping robot is smaller than the first absolute value distance threshold, the stage at this moment is the first stage, and water spray may be performed according to the relatively larger first pre-set amount (e.g., 10ml); when the actual moved distance of the floor mopping robot is greater than or equal to the first absolute value distance threshold, the stage at this moment is the second stage, and water spray may be performed according to the relatively smaller second pre-set amount (e.g., 3ml).

In a possible implementation, a target water spray amount that inversely correlates with the already moved distance may be set as the second pre-set amount.

In this embodiment, a target water spray amount that decreases as the already moved distance increases may be set as the second pre-set amount, and in the second stage, the above variable second pre-set amount of water may be sprayed each time.

In a possible implementation, the target water spray amount may be calculated based on a formula of V= -a×L + b, where L represents the already moved distance, V represents the target water spray amount, a, b are coefficients.

Illustratively, the coefficients a and b are 0.3 and 21.3m respectively, and the target water spray amount may be calculated based on the formula of V= -0.3×L+21.3. If the actual moved distance L is 1m, then the target water spray amount is 21ml; if the actual moved distance L is 11m, then the target water spray amount is 18ml; if the actual moved distance is 50m, then the target water spray amount is 6.3ml. As such, it may be realized that when the already moved distance increases, the water spray amount for each time of water spray gradually decreases, which is advantageous for saving water and extending the work time and cleaning area of the floor mopping robot.

Therefore, in this embodiment, the water spray system is controlled to spray relatively more water in the first stage that corresponds to the already moved distance being smaller than the first absolute value distance threshold, and to spray relatively less water in the second stage that corresponds to the already moved distance being greater than or equal to the first absolute value distance threshold. As such, not only the relatively more water sprayed in the first stage may be used to keep the mop and the floor sufficiently wet for ensuring a cleaning effect, but also water consumption in the water tank can be reduced when there is no need to consume a lot of water, thereby extending the effective work time and cleaning area.

Specifically limiting the water spray method in the first stage and the second stage of the first embodiment results in a fifth embodiment.

### Fifth embodiment:

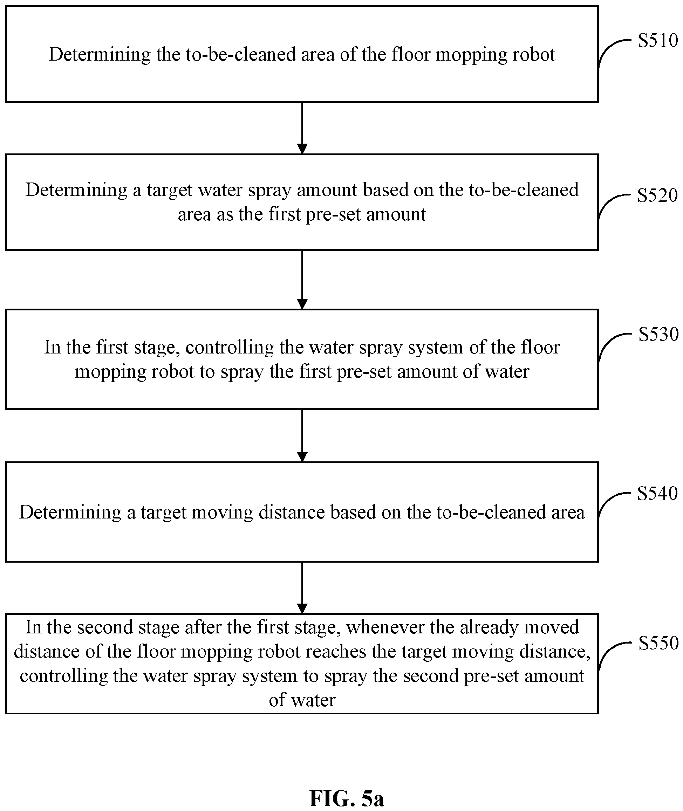

Referring to FIG. 5a, a water spray control method according to an illustrative embodiment may include the following steps:
Step S510, determining a to-be-cleaned area of the floor mopping robot.

In this embodiment, the to-be-cleaned area may be determined based on a map and a cleaning mode.

Step S520, determining a target water spray amount based on the to-be-cleaned area as the first pre-set amount.

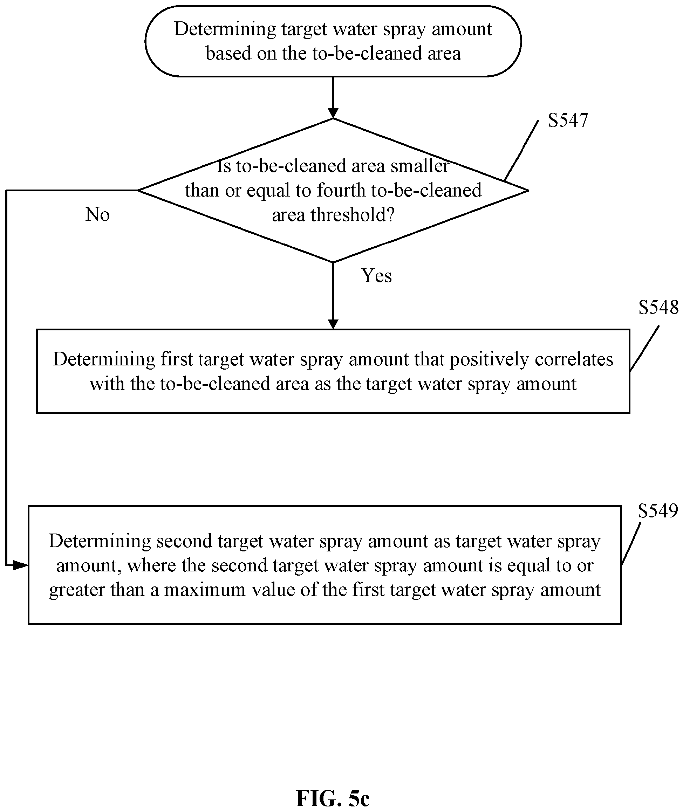

In this embodiment, the target water spray amount may be determined based on the to-be-cleaned area according to the method shown in FIG. 5c.

Referring to FIG. 5c, determining the target water spray amount based on the to-be-cleaned area may include the following steps:
Step S547, determining whether the to-be-cleaned area is smaller than or equal to a fourth to-be-cleaned area threshold.

When it is determined that the to-be-cleaned area is smaller than or equal to the fourth to-be-cleaned area threshold, step S548 may be executed; otherwise, step S549 may be executed.

Step S548, determining a first target water spray amount that positively correlates with the to-be-cleaned area as the target water spray amount.

Step S549, determining a second target water spray amount (e.g., 36ml) as the target water spray amount, where the second target water spray amount is equal to or greater than a maximum value of the first target water spray amount.

In this embodiment, in the first stage, a relationship between the water spray amount and the to-be-cleaned area is: the water spray amount increases as the to-be-cleaned area increases, until the to-be-cleaned area reaches a fourth to-be-cleaned area threshold, then the water spray amount is maintained at a fixed target water spray amount without regard to the to-be-cleaned area. Therefore, the first target water spray amount that positively correlates with the to-be-cleaned area may be determined as the target water spray amount, until the to-be-cleaned area reaches the fourth to-be-cleaned area threshold. After that, the second target water spray amount that is maintained as a fixed value may be determined as the target water spray amount.

After determining the target water spray amount in step S520, step S530 may be executed.

Step S530, in the first stage, controlling the water spray system to spray the determined target water spray amount of water.

Step S540, determining a target moving distance based on the to-be-cleaned area.

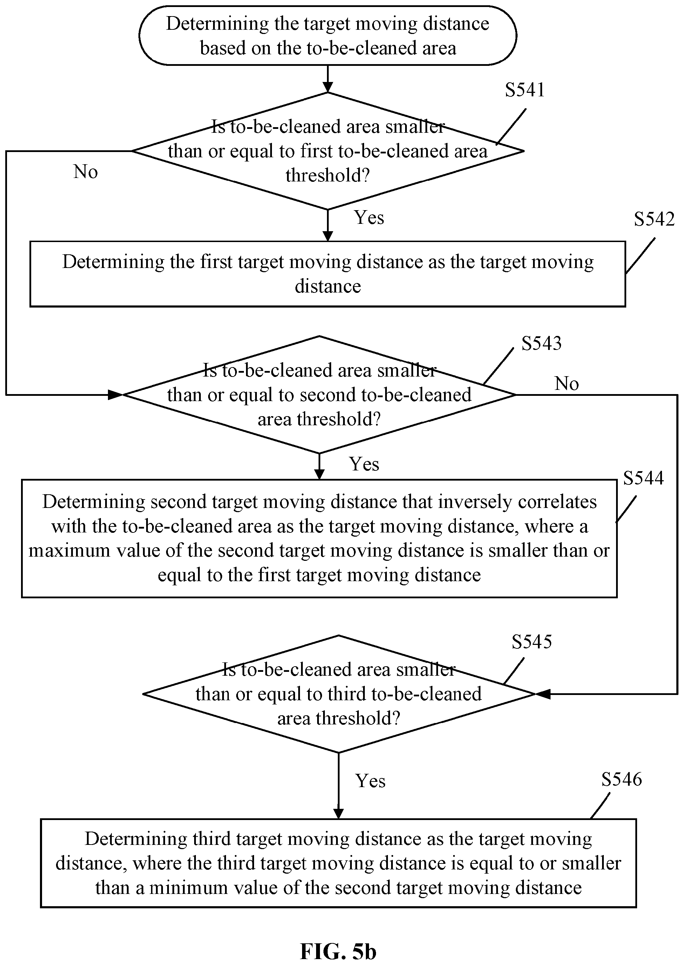

In this embodiment, the target moving distance may be determined based on the to-be-cleaned area according to the method shown in FIG. 5b.

Referring to FIG. 5b, determining the target moving distance based on the to-be-cleaned area may include the following steps:
Step S541, determining whether the to-be-cleaned area is smaller than or equal to a first to-be-cleaned area threshold.

When it is determined that the to-be-cleaned area is smaller than or equal to the first to-be-cleaned area threshold (e.g., 25 square feet), step S542 may be executed; otherwise, step S543 may be executed.

Step S542, determining a first target moving distance (e.g., 5.44m) as the target moving distance.

Step S543, determining whether the to-be-cleaned area is smaller than or equal to a second to-be-cleaned area threshold.

When it is determined that the to-be-cleaned area is smaller than or equal to the second to-be-cleaned area threshold (e.g., 100 square feet), step S544 may be executed; otherwise, step S545 may be executed.

Step S544, determining a second target moving distance that inversely correlates with the to-be-cleaned area as the target moving distance, where a maximum value of the second target moving distance is smaller than or equal to the first target moving distance.

In a possible implementation, the second target moving distance is equal to a difference resulting from deducting a product of a pre-set coefficient and the to-be-cleaned area from a pre-set distance. Illustratively, the pre-set distance may be 5.79m, the pre-set coefficient may be 0.0139, and therefore the second target moving distance = 5.79 - 0.0139 × the to-be-cleaned area.

Step S545, determining whether the to-be-cleaned area is smaller than or equal to a third to-be-cleaned area threshold.

When it is determined that the to-be-cleaned area is smaller than or equal to the third to-be-cleaned area threshold (e.g., 550 square feet), step S546 may be executed.

Step S546, determining the third target moving distance as the target moving distance, where the third target moving distance is equal to or smaller than a minimum value of the second target moving distance.

In this embodiment, in the second stage, a relationship between the water spray interval and the to-be-cleaned area is: the target moving distance is the relatively larger first target moving distance, when the to-be-cleaned area is greater than or equal to the first to-be-cleaned area threshold, the target moving distance at this moment is the relatively smaller second target moving distance; when the to-be-cleaned area is greater than or equal to the second to-be-cleaned area threshold but smaller than the third to-be-cleaned area threshold, the target moving distance at this moment is the relatively even smaller third target moving distance, therefore, when the to-be-cleaned area is smaller than or equal to the first to-be-cleaned area threshold, the target moving distance is the first target moving distance, then, when the to-be-cleaned area is greater than the first to-be-cleaned area threshold and smaller than or equal to the second to-be-cleaned area threshold, then the target moving distance is the second target moving distance, and subsequently, when the to-be-cleaned area is greater than the second to-be-cleaned area threshold and smaller than or equal to the third to-be-cleaned area threshold, then the target moving distance is the third target moving distance.

After determining the target moving distance in step S540, step S550 may be executed.

Step S550, in the second stage, whenever the already moved distance of the floor mopping robot reaches the target moving distance, controlling the water spray system to spray the second pre-set amount of water.

Therefore, in this embodiment, in the first stage, the water spray system is controlled to spray a target water spray amount of water determined based on the to-be-cleaned area (relatively more water), and in the second stage, relatively less water is sprayed whenever the target moving distance determined based on the to-be-cleaned area is reached. Therefore, not only relatively more water sprayed in the first stage can be used to maintain a wetness of components to ensure a cleaning effect, but also water consumption amount in the water tank can be reduced when there is no need to consume a lot of water, thereby extending the effective work time and cleaning area.

On the basis of the third embodiment, a third stage is further included (also referred to as a water saving stage), and performing water spray control in the third stage results in a sixth embodiment.

### Sixth embodiment:

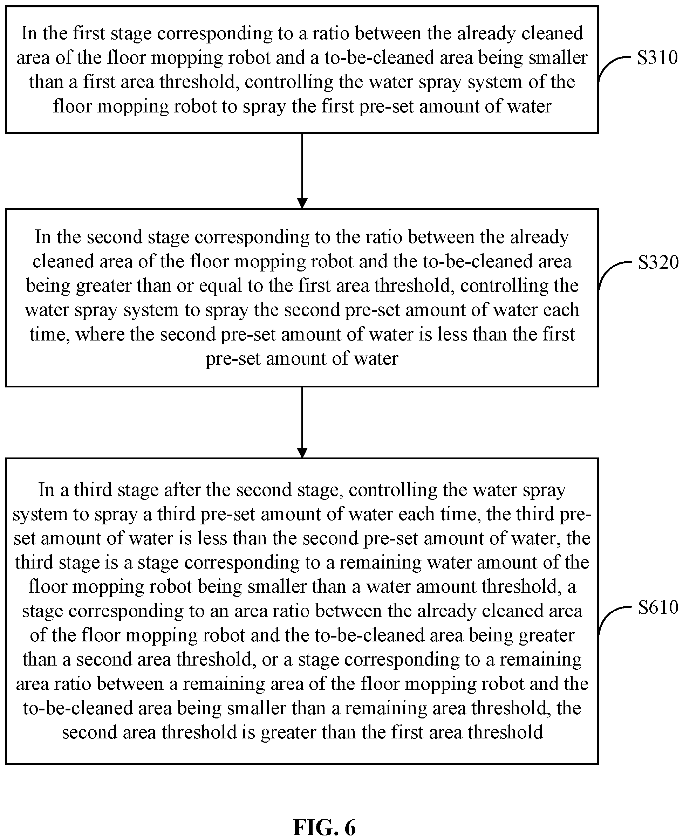

Referring to FIG. 6, a water spray control method according to an illustrative embodiment may include the following steps:
Step S310, in a first stage that corresponds to a ratio between an already cleaned area of the floor mopping robot and a to-be-cleaned area being less than a first area threshold, controlling the water spray system of the floor mopping robot to spray a first pre-set amount of water.
Step S320, in a second stage that corresponds to the ratio between the already cleaned area of the floor mopping robot and the to-be-cleaned area being greater than or equal to the first area threshold, controlling the water spray system to spray a second pre-set amount of water each time, where the second pre-set amount of water is less than the first pre-set amount of water.

Regarding steps S310 - S320, their descriptions can refer to the descriptions provided in the third embodiment, which are not repeated.

Step S610, in the third stage after the second stage, controlling the water spray system to spray a third pre-set amount of water each time, where the third pre-set amount of water is less than the second pre-set amount of water, the third stage is a stage corresponding to a remaining water amount of the floor mopping robot being smaller than a water amount threshold, a stage corresponding to an area ratio between the already cleaned area of the floor mopping robot and the to-be-cleaned area being greater than the second area threshold, or a stage corresponding to a remaining area ratio between a remaining area of the floor mopping robot and the to-be-cleaned area being smaller than a remaining area threshold, where the second area threshold is greater than the first area threshold.

In this embodiment, the second threshold may be set based on the remaining water amount (e.g., the remaining water amount is 30% or the remaining water amount is 30ml), and the third stage may be set based on the remaining water amount and the threshold, where, the actual water amount may be measured using a water amount sensor, the actual water amount is the remaining water amount. Alternatively, the second threshold may be set based on an area ratio between the actual moved area and the to-be-cleaned area (e.g., this area ratio may be 60%), and the third stage may be set based on the area ratio and the threshold. Here, the method for obtaining the actual moved area and the to-be-cleaned area can refer to the third embodiment, which is not repeated. Alternatively, the second threshold may be set based on a remaining area ratio between a remaining area and the to-be-cleaned area (e.g., the remaining area ratio may be 40%), and the third stage may be set based on the remaining area ratio and the threshold, where, the remaining area = the to-be-cleaned area - the actual moved area.

When the remaining water amount of the floor mopping robot is smaller than a water amount threshold, the stage at this moment is the third stage, and water spray is performed based on the water-saving third pre-set amount (e.g., 2ml, 1ml). Alternatively, when the area ratio between the actual moved area of the floor mopping robot and the to-be-cleaned area is greater than a second area threshold, the stage at this moment is the third stage, and water spray is performed each time based on the water-saving third pre-set amount (e.g., 2ml, 1ml). Alternatively, when the remaining area ratio of the floor mopping robot between the remaining area and the to-be-cleaned area is smaller than a remaining area threshold, the stage at this moment is the third stage, and water spray is performed each time based on the water-saving third pre-set amount (e.g., 2ml, 1ml).

Therefore, in this embodiment, the water spray system is controlled to spray relatively more water in the first stage, and to spray relatively less water in the second stage, and to spray even less water in the third stage. As such, not only it is ensured that the floor is sufficiently wetted to ensure the cleaning effect, but also water consumption amount in the water tank can be reduced when there is no need to consume a lot of water. In addition, when the amount of water in the water tank is very low or the already cleaned area is very large, water consumption amount can be further reduced, thereby extending the effective work time and cleaning area.

On the basis of the fourth embodiment, the third stage is further included (or referred to as a water-saving stage), and controlling water spray in the third stage results in a seventh embodiment.

### Seventh embodiment:

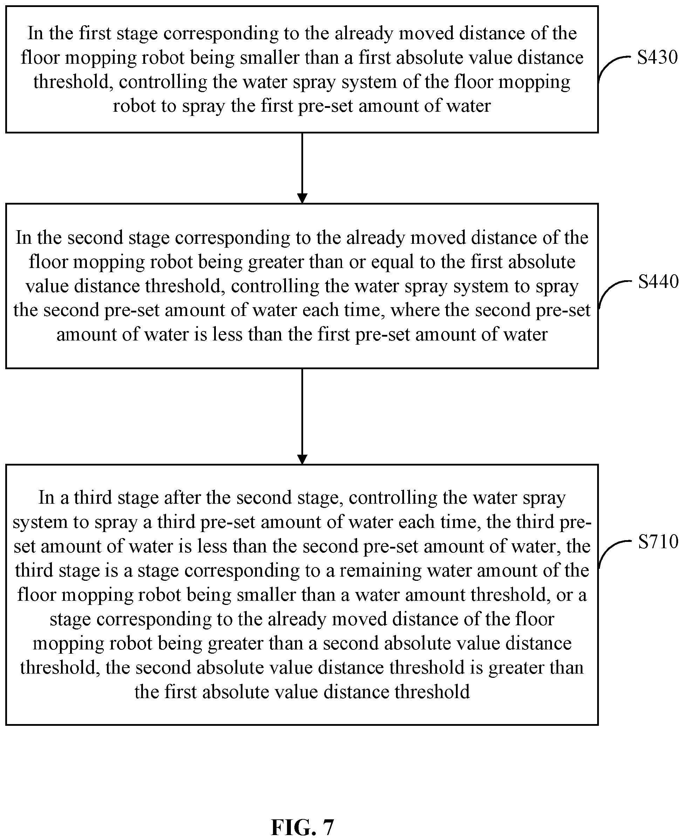

Referring to FIG. 7, a water spray control method according to an illustrative embodiment may include the following steps:
Step S410, in a first stage corresponding to an already moved distance of the floor mopping robot being smaller than a first absolute value distance threshold, controlling the water spray system of the floor mopping robot to spray a first pre-set amount of water.
Step S420, in a second stage corresponding to the already moved distance of the floor mopping robot being greater than or equal to the first absolute value distance threshold, controlling the water spray system to spray a second pre-set amount of water each time, where the second pre-set amount of water is less than the first pre-set amount of water.

Descriptions regarding steps S410 - S420 can refer to the descriptions of the fourth embodiment, which are not repeated.

Step S710, in a third stage after the second stage, controlling the water spray system to spray a third pre-set amount of water each time, the third pre-set amount of water is less than the second pre-set amount of water, and the third stage is a stage corresponding to the remaining water amount of the floor mopping robot being less than a water amount threshold, or a stage corresponding to the already moved distance of the floor mopping robot being greater than a second absolute value distance threshold, where the second absolute value distance threshold is greater than the first absolute value distance threshold.

In this embodiment, the second threshold may be set based on the remaining water amount (e.g., there may be 30% remaining water or the remaining water amount may be 30ml), and the third stage may be set based on the remaining water amount and the threshold, the detailed descriptions of which can refer to the sixth embodiment.

Alternatively, the second threshold may be set based on the actual moved distance (e.g., the second absolute value distance threshold may be 200m), and the third stage may be set based on the actual moved distance and the threshold. When the actual moved distance of the floor mopping robot is greater than the second absolute value distance threshold, the stage at this moment is the third stage, and the water spray may be performed each time based on the water-saving third pre-set amount (e.g., 2ml, 1ml).

Therefore, in this embodiment, the water spray system is controlled to spray relatively more water in the first stage, to spray relatively less water in the second stage, and to spray even less water in the third stage. As such, not only it is ensured that the floor is sufficiently wetted to ensure the cleaning effect, but also water consumption amount in the water tank can be reduced when there is no need to consume a lot of water. In addition, when the amount of water in the water tank is very low or the already cleaned area is very large, water consumption amount can be further reduced, thereby extending the effective work time and cleaning area.

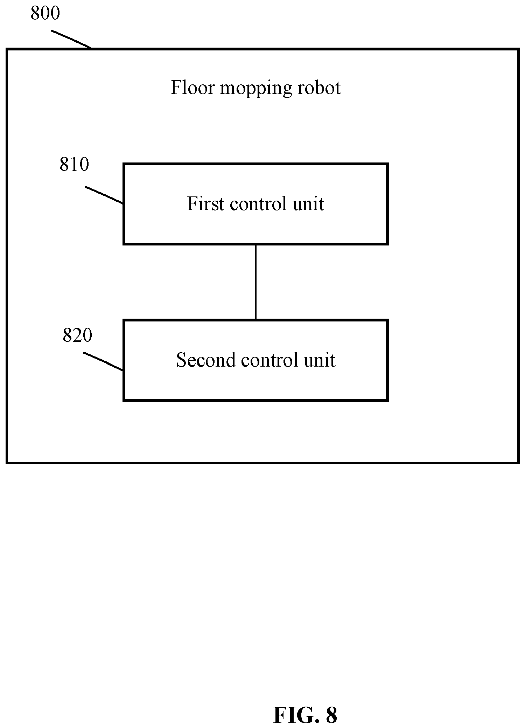

FIG. 8 is a diagram of a floor mopping robot according to an illustrative embodiment. As shown in FIG. 8, a floor mopping robot 800 may include a first control unit 810 and a second control unit 820.

The first control unit 810 may be configured to control, in the first stage, the water spray system of the floor mopping robot to spray the first pre-set amount of water. The second control unit 820 may be connected with the first control unit 810, and may be configured to control, in the second stage after the first stage, the water spray system to spray the second pre-set amount of water each time, where, each of the first stage and the second stage is related to the out-of-station distance, the already cleaned area, or the already moved distance of the floor mopping robot. The out-of-station distance is a distance that the floor mopping robot has moved away from a charging station since start-up. The second pre-set amount of water is less than the first pre-set amount of water.

In a possible implementation, the first stage is a stage corresponding to the out-of-station distance of the floor mopping robot being smaller than or equal to an out-of-station distance threshold, and the second stage is a stage corresponding to the out-of-station distance of the floor mopping robot being greater than the out-of-station distance threshold.

In a possible implementation, the first stage is a stage corresponding to a ratio between the already cleaned area of the floor mopping robot and the to-be-cleaned area being smaller than the first area threshold; the second stage is a stage corresponding to the ratio being greater than or equal to the first area threshold.

In a possible implementation, the first stage is a stage corresponding to the already cleaned area of the floor mopping robot being smaller than the first absolute value area threshold; the second stage is a stage corresponding to the already cleaned area being greater than or equal to the first absolute value area threshold; or the first stage is a stage corresponding to the already moved distance of the floor mopping robot being smaller than the first absolute value distance threshold; the second stage is a stage corresponding to the already moved distance being greater than or equal to the first absolute value distance threshold.

In a possible implementation, the second control unit 820 may be configured to: determine the to-be-cleaned area of the floor mopping robot; determine the target moving distance based on the to-be-cleaned area; in the second stage, whenever the already moved distance of the floor mopping robot reaches the target moving distance, control the water spray system to spray the second pre-set amount of water.

In a possible implementation, the second control unit 820 may also be configured to: when the to-be-cleaned area is smaller than or equal to the first to-be-cleaned area threshold, determine the first target moving distance as the target moving distance; when the to-be-cleaned area is greater than the first to-be-cleaned area threshold and smaller than or equal to the second to-be-cleaned area threshold, determine the second target moving distance that inversely correlates with the to-be-cleaned area as the target moving distance, where the maximum value of the second target moving distance is smaller than or equal to the first target moving distance.

In a possible implementation, the second control unit 820 may be configured to: when the to-be-cleaned area is greater than the second to-be-cleaned area threshold and smaller than or equal to the third to-be-cleaned area threshold, determine the third target moving distance as the target moving distance, where the third target moving distance is equal to or smaller than the minimum value of the second target moving distance.

In a possible implementation, the second target moving distance is equal to a difference resulting from deducting a product of a pre-set coefficient and the to-be-cleaned area from a pre-set distance.

In a possible implementation, the floor mopping robot 800 may also include: a third control unit (not shown), configured to control, in the third stage after the second stage, the water spray system to spray the third pre-set amount of water each time, where the third pre-set amount of water is less than the second pre-set amount of water, and the third stage is a stage corresponding to the remaining water amount of the floor mopping robot being smaller than the water amount threshold; or the third stage is a stage corresponding an area ratio between the already cleaned area of the floor mopping robot and the to-be-cleaned area being greater than the second area threshold, where the second area threshold is greater than the first area threshold; or the third stage is a stage corresponding to a remaining area ratio between the remaining area of the floor mopping robot and the to-be-cleaned area being smaller than the remaining area threshold.

In a possible implementation, the floor mopping robot 800 may also include: a third control unit (not shown), configured to control, in the third stage after the second stage, the water spray system to spray the third pre-set amount of water each time, where the third pre-set amount of water is less than the second pre-set amount of water, where the third stage is a stage corresponding to the remaining water amount of the floor mopping robot being smaller than the water amount threshold; or the third stage is a stage corresponding to the already moved distance of the floor mopping robot being greater than the second absolute value distance threshold, where the second absolute value distance threshold is greater than the first absolute value distance threshold.

In a possible implementation, the first control unit 810 may also be configured to: determine the to-be-cleaned area of the floor mopping robot; determine the target water spray amount based on the to-be-cleaned area, as the first pre-set amount; in the first stage, control the water spray system to spray the determined target water spray amount of water.

In a possible implementation, the first control unit 810 may also be configured to: when the to-be-cleaned area is smaller than or equal to the fourth to-be-cleaned area threshold, determine the first target water spray amount that positively correlates with the to-be-cleaned area as the target water spray amount; when the to-be-cleaned area is greater than the fourth to-be-cleaned area threshold, determine the second target water spray amount as the target water spray amount, where the second target water spray amount is equal to or greater than the maximum value of the first target water spray amount.

In a possible implementation, the second control unit 820 may also be configured to: determine the target moving distance; in the second stage, whenever the already moved distance of the floor mopping robot reaches the target moving distance, control the water spray system to spray the second pre-set amount of water.

In a possible implementation, the second control unit 820 may also be configured to: determine the fourth target moving distance that inversely correlates with the already moved distance of the floor mopping robot as the target moving distance; or determine the fixed fifth target moving distance as the target moving distance.

In a possible implementation, the second control unit 820 may also be configured to: when the first stage is a stage corresponding to the already moved distance of the floor mopping robot being smaller than the first absolute value distance threshold, determine the target water spray amount that inversely correlates with the already moved distance as the second pre-set amount.

In a possible implementation, the second control unit 820 may also be configured to: calculate the target water spray amount based on the formula of V= -a×L + b, where L represents the already moved distance, V represents the target water spray amount, a, b are coefficients.

In a possible implementation, the first control unit 810 may also be configured to: in the first stage, during a time period in which the already moved distance of the floor mopping robot reaches a first distance, control the water spray system to accumulatively spray the first pre-set amount of water; or in the first stage, at a time instance when the already moved distance of the floor mopping robot reaches the first distance, control the water spray system to spray the first pre-set amount of water.

In a possible implementation, the first control unit 810 may also be configured to: in the first stage, during a time period in which the already cleaned area of the floor mopping robot reaches a first area, control the water spray system to accumulatively spray the first pre-set amount of water; or in the first stage, at a time instance when the already cleaned area of the floor mopping robot reaches the first area, control the water spray system to spray the first pre-set amount of water.

In the apparatus of the above embodiments, the detailed implementations for operations executed by each unit have been described in detail in the embodiments of the related methods, which are not repeated.

In some embodiments, functions or modules included in the apparatus provided by embodiments of the present disclosure may be used to execute the methods described in the above embodiments. The detailed implementations can refer to the above descriptions of the above embodiments. For simplicity of description, these are not repeated.

Embodiments of the present disclosure also provides a computer-readable storage medium, which stores computer program instructions. When the computer program instructions are executed by a processor of the floor mopping robot, the above-described water spray control methods can be implemented. The computer-readable storage medium may be transitory or non-transitory computer-readable storage medium.

Embodiments of the present disclosure also provide a water spray control apparatus, including: a processor; a storage device configured to store processor-executable instructions; here, the processor is configured to execute the above-described water spray control methods when executing the instructions stored in the storage device.

Embodiments of the present disclosure also provide a computer program product, including computer-readable codes, or a non-transitory computer-readable storage medium that carries the computer-readable codes. When the computer-readable codes are executed by a processor of the floor mopping robot, the processor of the floor mopping robot executes the above-described water spray control methods.

Various embodiments of the present disclosure have been described above. Such descriptions are illustrative, and are not exhaustive, and the present disclosure is not limited to the described embodiments. Without deviating from the scope and spirit of the described various embodiments, a person having ordinary skills in the art can appreciate that many modifications and changes may be obvious. The selections of the terms used herein are for the purpose of explaining the principles of various embodiments, the actual implementations or the improvements to the technologies in the market, or to enable other persons having ordinary skills in the art to understand various disclosed embodiments.

## Claims

1. A water spray control method for a floor mopping robot, **characterized in that**, comprising:
a first control step, configured to control, in a first stage, a water spray system of the floor mopping robot to spray a first pre-set amount of water; and
a second control step, configured to control, in a second stage after the first stage, the water spray system to spray a second pre-set amount of water each time,
wherein, each of the first stage and the second stage is related to an out-of-station distance, an already cleaned area, or an already moved distance of the floor mopping robot, wherein the out-of-station distance is a distance that the floor mopping robot has moved away from a charging station since start-up, wherein the second pre-set amount of water is less than the first pre-set amount of water.

2. The water spray control method of claim 1, **characterized in that**,
wherein the first stage is a stage corresponding to the out-of-station distance of the floor mopping robot being smaller than or equal to an out-of-station distance threshold, and the second stage is a stage corresponding to the out-of-station distance of the floor mopping robot being greater than the out-of-station distance threshold.

3. The water spray control method of claim 1, **characterized in that**,
wherein the first stage is a stage corresponding to a ratio between the already cleaned area of the floor mopping robot and a to-be-cleaned area being smaller than a first area threshold;
wherein the second stage is a stage corresponding to the ratio being greater than or equal to the first area threshold.

4. The water spray control method of claim 1, **characterized in that**,
wherein the first stage is a stage corresponding to the already cleaned area of the floor mopping robot being smaller than a first absolute value area threshold; wherein the second stage is a stage corresponding to the already cleaned area being greater than or equal to the first absolute value area threshold; or
wherein the first stage is a stage corresponding to the already moved distance of the floor mopping robot being smaller than a first absolute value distance threshold; wherein the second stage is a stage corresponding to the already moved distance being greater than or equal to the first absolute value distance threshold.

5. The water spray control method of any of claims 1-4, **characterized in that**, wherein the second control step comprises:
determining a to-be-cleaned area of the floor mopping robot;
determining a target moving distance based on the to-be-cleaned area;
in the second stage, whenever the already moved distance of the floor mopping robot reaches the target moving distance, controlling the water spray system to spray the second pre-set amount of water.

6. The water spray control method of claim 5, **characterized in that**, wherein determining the target moving distance based on the to-be-cleaned area comprises:
when the to-be-cleaned area is smaller than or equal to a first to-be-cleaned area threshold, determining a first target moving distance as the target moving distance;
when the to-be-cleaned area is greater than the first to-be-cleaned area threshold and smaller than or equal to a second to-be-cleaned area threshold, determining a second target moving distance that inversely correlates with the to-be-cleaned area as the target moving distance, wherein a maximum value of the second target moving distance is smaller than or equal to the first target moving distance.

7. The water spray control method of claim 6, **characterized in that**, wherein determining the target moving distance based on the to-be-cleaned area comprises:
when the to-be-cleaned area is greater than the second to-be-cleaned area threshold and smaller than or equal to a third to-be-cleaned area threshold, determining a third target moving distance as the target moving distance, wherein the third target moving distance is equal to or smaller than a minimum value of the second target moving distance.

8. The water spray control method of claim 6 or 7, **characterized in that**, wherein the second target moving distance is equal to a difference resulting from deducting a product of a pre-set coefficient and the to-be-cleaned area from a pre-set distance.

9. The water spray control method of claim 3, **characterized in that**, further comprising:
a third control step, configured to control, in a third stage after the second stage, the water spray system to spray a third pre-set amount of water each time, wherein the third pre-set amount of water is less than the second pre-set amount of water,
wherein the third stage is a stage corresponding to a remaining water of the floor mopping robot being smaller than a water amount threshold; or
wherein the third stage is a stage corresponding to an area ratio between the already cleaned area of the floor mopping robot and the to-be-cleaned area being greater than a second area threshold, wherein the second area threshold is greater than the first area threshold; or
wherein the third stage is a stage corresponding to a remaining area ratio between a remaining area of the floor mopping robot and the to-be-cleaned area being smaller than a remaining area threshold.

10. The water spray control method of claim 4, **characterized in that**, also comprising:
a third control step, configured to control, in a third stage after the second stage, the water spray system to spray a third pre-set amount of water each time, wherein the third pre-set amount of water is less than the second pre-set amount of water,
wherein the third stage is a stage corresponding to a remaining water amount of the floor mopping robot being smaller than a water amount threshold; or
wherein the third stage is a stage corresponding to the already moved distance of the floor mopping robot being greater than a second absolute value distance threshold, wherein the second absolute value distance threshold is greater than the first absolute value distance threshold.

11. The water spray control method of any of claims 1-4, 6-7 and 9-10, **characterized in that**, wherein the first control step comprises:
determining the to-be-cleaned area of the floor mopping robot;
determining a target water spray amount based on the to-be-cleaned area, as the first pre-set amount;
in the first stage, controlling the water spray system to spray the target water spray amount of water.

12. The water spray control method of claim 11, **characterized in that**, wherein determining the target water spray amount based on the to-be-cleaned area comprises:
when the to-be-cleaned area is smaller than or equal to a fourth to-be-cleaned area threshold, determining a first target water spray amount that positively correlates with the to-be-cleaned area as the target water spray amount;
when the to-be-cleaned area is greater than the fourth to-be-cleaned area threshold, determining a second target water spray amount as the target water spray amount, wherein the second target water spray amount is equal to or greater than a maximum value of the first target water spray amount.

13. The water spray control method of any of claims 1-4, **characterized in that**, wherein the second control step comprises:
determining a target moving distance;
in the second stage, whenever the already moved distance of the floor mopping robot reaches the target moving distance, controlling the water spray system to spray the second pre-set amount of water.

14. The water spray control method of claim 13, **characterized in that**, wherein determining the target moving distance comprises:
determining a fourth target moving distance that inversely correlates with the already moved distance of the floor mopping robot as the target moving distance; or
determining a fixed fifth target moving distance as the target moving distance.

15. The water spray control method of claim 4, **characterized in that**,
when the first stage is a stage corresponding to the already moved distance of the floor mopping robot being smaller than the first absolute value distance threshold, determining a target water spray amount that inversely correlates with the already moved distance as the second pre-set amount.

16. **The** water spray control method of claim 15, **characterized in that**,
wherein the target water spray amount is calculated based on a formula of V= -a×L + b, wherein L represents the already moved distance, V represents the target water spray amount, a, b are coefficients.

17. The water spray control method of any of claims 1-4, 6-7, 9-10, 12 and 14-16, **characterized in that**, wherein the first control step comprises:
in the first stage, during a time period in which the already moved distance of the floor mopping robot reaches a first distance, controlling the water spray system to accumulatively spray the first pre-set amount of water; or
in the first stage, at a time instance when the already moved distance of the floor mopping robot reaches the first distance, controlling the water spray system to spray the first pre-set amount of water.

18. The water spray control method of any of claims 1-4, 6-7, 9-10, 12 and 14-16, **characterized in that**, wherein the first control step comprises:
in the first stage, during a time period in which the already cleaned area of the floor mopping robot reaches a first area, controlling the water spray system to accumulatively spray the first pre-set amount of water; or
in the first stage, at a time instance when the already cleaned area of the floor mopping robot reaches the first area, controlling the water spray system to spray the first pre-set amount of water.

19. A floor mopping robot, **characterized in that**, comprising:
a first control unit, configured to control, in a first stage, a water spray system of the floor mopping robot to spray a first pre-set amount of water; and
a second control unit, configured to control, in a second stage after the first stage, the water spray control system to spray a second pre-set amount of water,
wherein, each of the first stage and the second stage is related to an out-of-station distance, an already cleaned area, or an already moved distance of the floor mopping robot, wherein the out-of-station distance is a distance that the floor mopping robot has moved away from a charging station since start-up, wherein the second pre-set amount of water is less than the first pre-set amount of water.

20. A water spray control apparatus for a floor mopping robot, comprising:
a processor;
a storage device configured to store processor-executable instructions,
wherein, the processor is configured to execute the water spray control method of any of claims 1-8 when the processor executes the instructions stored in the storage device.

21. A computer-readable storage medium, which stores computer program instructions, **characterized in that**, when the computer program instructions are executed by a processor of a floor mopping robot, the water spray control method of any of claims 1-18 is executed.
